# EUROPEAN PATENT APPLICATION

(11) **EP 4 600 058 A1**
(43) Date of publication of application: **13.08.2025**
(21) Application number: 24156632.2
(22) Date of filing: 08.02.2024
(51) Int. Cl.: B60J 5/04

(54) **ASSEMBLY FOR A VEHICLE**

(71) Applicant: MINEBEA ACCESSSOLUTIONS ITALIA S.P.A., 10044 Pianezza (IT)
(72) Inventor: PEYNOT, Thomas, 10044 Pianezza (IT)
(74) Representative: Germain Maureau

(57) **Abstract**

The present invention relates to an assembly (1) for a vehicle comprising:
- a vehicle door panel (2),
- a mounting bracket (3) for mounting a vehicle door handle on the vehicle door panel (2),

the vehicle door panel (2) and the mounting bracket (3) comprising complementary coupling elements (4, 5) to assemble the mounting bracket (3) to the vehicle door panel (2),
the complementary coupling elements (4, 5) being configured so that the mounting bracket (3) can be mounted on the vehicle door panel (2) between
o an intermediate assembly position, and
o a final assembly position wherein the mounting bracket (3) cannot be separated from the vehicle door panel (2) without first moving the mounting bracket (3) toward the intermediate assembly position.

## Description

### Technical field

The present invention relates to attaching a door handle to a vehicle door panel and more particularly provides a mounting bracket for mounting the door handle to the vehicle door panel and a vehicle door panel comprising complementary coupling elements to detachably assemble the mounting panel to the vehicle door panel and ensure the positioning of the mounting bracket with respect to the vehicle door panel before the mounting bracket is attached to the vehicle door panel.

### Background

It is known for motor vehicles to have a vehicle door comprising a vehicle door panel and a handle assembly to be attached to the vehicle door panel. The handle assembly generally comprises a door handle and a mounting bracket to mount the door handle to the vehicle door panel. The door handle is generally attached to the mounting bracket and the mounting bracket is generally attached to the vehicle door panel. Screws, bolts, or rivets are employed to attach the mounting bracket to the door panel.

In order to attach the mounting bracket to the vehicle door panel, an operator generally uses one hand to ensure the positioning of the mounting bracket on the vehicle door panel and the other hand to attach, for example by screwing, the mounting bracket to the vehicle door handle. This process is not optimal for the operator.

It is desirable to provide means permitting to ensure the positioning of the mounting bracket on the vehicle door panel, before the mounting bracket is attached to the vehicle door panel.

This would allow for the operator two have both hands free when attaching the mounting bracket to the vehicle door panel, for example by screwing.

There is a need to provide a simple way to ensure the positioning of the mounting bracket with respect to the vehicle door panel before the mounting bracket is attached to the vehicle door panel. There is also a need to ensure that the mounting bracket does not fall from the vehicle door panel before the mounting bracket is attached to the vehicle door panel.

### Summary of the invention

To this end, according to an aspect, the invention concerns an assembly for a vehicle comprising a vehicle door panel and a mounting bracket for mounting a vehicle door handle on the vehicle door panel.

The vehicle door panel and the mounting bracket comprise complementary coupling elements to assemble, for example to detachably assemble, the mounting bracket to the vehicle door panel.

The complementary coupling elements can ensure the positioning of the mounting bracket with respect to the vehicle door panel when the mounting bracket is assembled to the vehicle door panel before/prior to attaching the mounting bracket to the vehicle door, for example by screwing.

The complementary coupling elements are configured so that the mounting bracket can be mounted on the vehicle door panel between
an intermediate assembly position, for example wherein the mounting bracket can be separated from the vehicle door panel, and
a final assembly position wherein the mounting bracket cannot be separated from the vehicle door panel without first moving the mounting bracket toward the intermediate assembly position.

The assembly can comprise the following features, considered alone or in any technically possible combination.

The complementary coupling elements are configured so that the mounting bracket can be assembled to the vehicle door panel by mounting the mounting bracket on the vehicle door panel in the intermediate assembly position via a movement along a first axis X, and moving the mounting bracket with respect to the vehicle door panel via a movement along a second axis Z from the intermediate assembly position toward the final assembly position wherein the mounting bracket cannot be separated from the vehicle door panel via a movement along the first axis X.

The complementary coupling elements are configured so that the mounting bracket can be assembled to the vehicle door by mounting the mounting bracket on the vehicle door in the intermediate assembly position via a translation movement in a direction, for example a forward direction, along the first axis X, and moving the mounting bracket with respect to the vehicle door panel via a translation movement in a direction, for example a downward direction, along the second axis Z, from the intermediate assembly position toward the final assembly position wherein the mounting bracket cannot be separated from the vehicle door via a translation movement in an opposite direction, for example a backward direction, along the first axis X.

The vehicle door panel comprises an inner side, an outer side and a first coupling element of the complementary coupling element, the first coupling element comprising a wall delimiting a hole opening on both sides of the vehicle door panel and wherein the mounting bracket comprises a second coupling element of the complementary coupling elements, the second coupling element comprising at least one leg.

The hole has a first part extending along a first axis and a second part extending from the first part along a second axis, for example distinct from the first axis.

The first axis can correspond to the third axis of the vehicle door panel. The second axis can correspond to the second axis of the vehicle door panel.

The second part can extend on both sides of the first part.

The wall of the first coupling element delimits a hole having a T-shape.

The second coupling element can comprise the first leg and a second leg. The first leg can extend from a base of the mounting bracket, for example in a first direction for example orthogonally to the base, and the second leg can extend from the first leg, for example in a second direction, for example distinct from the first direction, for example parallel to the base.

The second coupling element comprises the first leg and a second leg forming a T-shape. The second coupling element has a T-shape.

The first coupling element and the second coupling element have complementary shapes.

According to an aspect the invention concerns an assembly for a vehicle comprising a vehicle door panel and a mounting bracket for mounting a vehicle door handle on the vehicle door panel.

The vehicle door panel and the mounting bracket comprise complementary coupling elements to assemble, for example to detachably assemble, the mounting bracket to the vehicle door panel.

The complementary coupling elements can ensure the positioning of the mounting bracket with respect to the vehicle door panel when the mounting bracket is assembled to the vehicle door panel before/ prior to attaching the mounting bracket to the vehicle door, for example by screwing.

The complementary coupling elements are configured so that the mounting bracket can be assembled to the vehicle door by :
mounting the mounting bracket on the vehicle door in an intermediate assembly position via a movement along a first axis X, and
moving the mounting bracket with respect to the vehicle door panel via a movement along a second axis Z, so as to move the mounting bracket from the intermediate assembly position toward a final assembly position wherein the mounting bracket cannot be separated from the vehicle door via a movement along the first axis X.

According to a further aspect, the invention concerns a mounting bracket for mounting a door handle to a vehicle door panel, the mounting bracket comprising :
a base, and
a coupling element, for example complementary to a coupling element of a vehicle door panel to assemble the mounting bracket to the vehicle door panel, the coupling element, the coupling element comprising a first leg and a second leg, for example forming a T-shape, the first leg extending, for example in a first direction, for example orthogonally, from the base and the second leg extending from the first leg, for example in a second direction, for example parallel to the base.

According to a further aspect, the invention concerns a vehicle door panel comprising an inner side and an opposite outer side, the vehicle door panel comprising a coupling element, for example complementary to a coupling element of a mounting bracket to assemble the mounting bracket to the vehicle door panel, the coupling element comprising a wall delimiting a hole opening on both sides of the vehicle door panel. The hole can have first part extending along a first axis and a second part extending from the first part along a second axis, for example distinct from the first axis.

The hole can have a T-shape.

According to a further aspect, the invention concerns a method for attaching a mounting bracket to a vehicle door panel of the assembly according to claim 1, the method comprising the steps of :
mounting the mounting bracket on an inner side of a vehicle door panel in an intermediate assembly position via a movement along a first axis X, and
moving the mounting bracket with respect to the vehicle door panel via a movement along a second axis Z, from the intermediate assembly position toward the final assembly position.

The vehicle door panel is arranged so that the mounting bracket remains external to the inner side of the vehicle door panel.

The method can comprise a previous step wherein an inner vehicle door handle can be attached to the mounting bracket.

The method can comprise a subsequent step wherein the mounting bracket can be attached to the vehicle door panel, for example by means of screws.

### Brief description of the drawings

Figure 1 shows an assembly comprising a mounting bracket and a vehicle door panel according to the invention.
Figure 2 shows the mounting bracket assembled on the vehicle door panel in an intermediate assembly position.
Figure 3 shows the mounting bracket assembled on the vehicle door panel in a final assembly position.
Figure 4 shows the vehicle door panel according to the invention.
Figure 5 shows the mounting bracket according to the invention.
Figure 6 is an isometric view of the mounting bracket according to the invention.
Figure 7 shows the mounting bracket and a bracket cover according to an embodiment of the invention.

### Description of the embodiments

Hereinafter, embodiments of the invention will be described with reference to schematic views. Throughout the figures, the same elements are indicated by the same reference numerals.

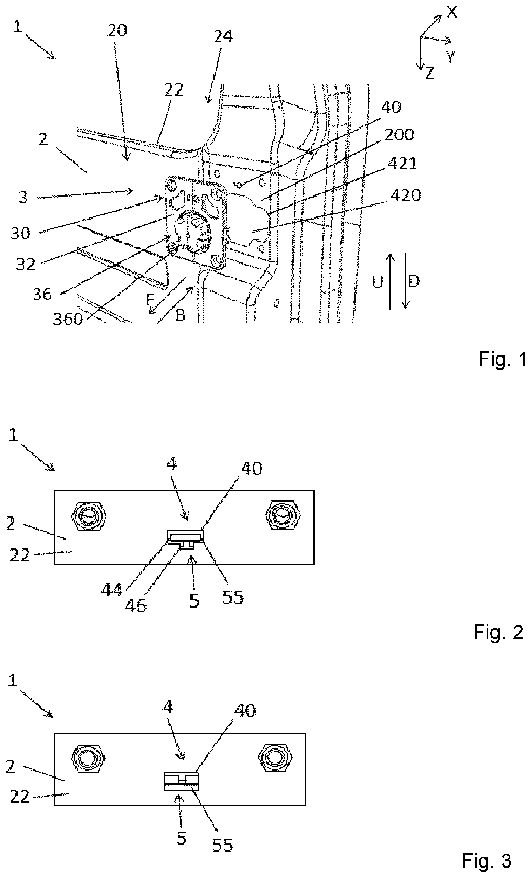

Figure 1 illustrates an assembly 1 for a vehicle, for example for a motorized vehicle, for example for a van.

The assembly 1 comprises a vehicle door panel 2, for example for a sliding vehicle door, for example of a van and a mounting bracket 3 for mounting a vehicle door handle (not shown) on the vehicle door panel 2.

The vehicle door panel 2 and the mounting bracket 3 comprise complementary coupling elements 4, 5 to assemble the mounting bracket 3 to the vehicle door panel 2.

The complementary coupling elements 4, 5 can be configured so that the mounting bracket 3 can be mounted or assembled, for example movably mounted, for example movably mounted in translation, on the vehicle door panel 2 between an intermediate assembly position (figure 2) wherein for example the mounting bracket 3 can be separated from the vehicle door panel 2, and a final assembly position (figure 3) wherein the mounting bracket 3 cannot be separated from the vehicle door panel 2 without first moving the mounting bracket 3 toward the intermediate assembly position (figure 2). The complementary coupling elements 4, 5 can be configured to detachably assemble the mounting bracket 3 to the vehicle door panel 2, before the mounting bracket 3 is attached to the vehicle door panel 2 for example by screwing.

The complementary coupling elements 4, 5 are arranged so as to ensure the positioning of the mounting bracket 3 with respect to the vehicle door panel 2 when the mounting bracket 3 is assembled to the vehicle door panel 2, for example when the mounting bracket 3 is in the final assembled position (figure 3), for example before the mounting bracket 3 is attached to the vehicle door panel 2 for example by screwing.

Thanks to the complementary coupling elements 4, 5, the mounting bracket 3 can be maintained assembled to the vehicle door panel 2 before the mounting bracket 3 is attached to the vehicle door panel 2. This allows for an operator to have both hands free when attaching the mounting bracket 3 to the vehicle door panel 2.

Furthermore as, in the final assembly position, the mounting bracket 3 cannot be separated from the vehicle door panel 2, this prevent the mounting bracket 3 to fall from the vehicle door panel 2 before the mounting bracket 3 is attached to the vehicle door panel 2.

The mounting bracket 3 can be attached to the vehicle door panel 2, for example when the mounting bracket is in the final assembly position, for example by means of attaching elements such as screws. When the mounting bracket is attached to the vehicle door, the mounting bracket is stationary secured to the vehicle door panel and cannot move with respect to the vehicle door panel.

As illustrated in figure 1, the complementary coupling elements 4, 5 can be configured so that the mounting bracket 3 can be assemble to the vehicle door panel 2 by mounting the mounting bracket 3 on the vehicle door 2 in the intermediate assembly position (figure 2) via a translation movement, for example in a direction, for example a forward direction, along the first axis X. The complementary coupling elements 4, 5 can be further configured so that the mounting bracket 3 can further be moved from the intermediate assembly position (figure 2) toward the final assembly position (figure 3) via a translation movement, for example in a direction, for example a downward direction along the second axis Z.

The complementary coupling elements 4, 5 can be configured so that in the final assembly position (figure 3), the mounting bracket 3 cannot be separated from the vehicle door panel 2 via a translation movement in an opposite direction, for example a backward direction along the first axis X. This configuration permits to prevent the mounting bracket 3 to fall from the vehicle door panel 2 before the mounting bracket 3 is attached to the vehicle door panel 2 for example by means of screws.

The mounting bracket 3 cannot be separated from the vehicle door panel 2 without first moving, for example moving back, the mounting bracket 3 toward the intermediate assembly position (figure 2), for example via a translation movement in an opposite direction, for example an upward direction, along the second axis Z.

To this end the complementary coupling elements 4, 5 comprise a first coupling element 4 and a second coupling element 5 which can be of complementary shapes, for example of complementary T-shapes.

In the described examples, the vehicle door panel 2 comprises the first coupling element 4 and the mounting bracket 3 comprises the second coupling element 5. The complementary coupling elements 4, 5 can comprise two, for example only two complementary coupling elements 4, 5, so that each of the vehicle door panel 2 and the mounting bracket 3 can comprise only one of the two complementary coupling elements 4, 5. This allows to simplify the arrangement of the mounting bracket and the vehicle door panel.

As an alternative, the mounting bracket 3 can comprise the first coupling element 4 and the vehicle door panel 2 can comprise the second coupling element 5.

The vehicle door panel 2 is described.

The vehicle door panel 2 can be a vehicle door panel for a sliding door, for example for motorized vehicles comprising sliding doors such as vans.

As illustrated in figures 1 to 4, the vehicle door panel 2 comprises an inner side 20 and an opposite outer side 22 and can comprise a window aperture 24 for a window glass, opening on both sides 20, 22 of the vehicle door panel 2.

The vehicle door panel 2 can extend along a first axis X, a second axis Z and a third axis Y in a position for normal door use, for example, when the vehicle door panel is attached to the vehicle.

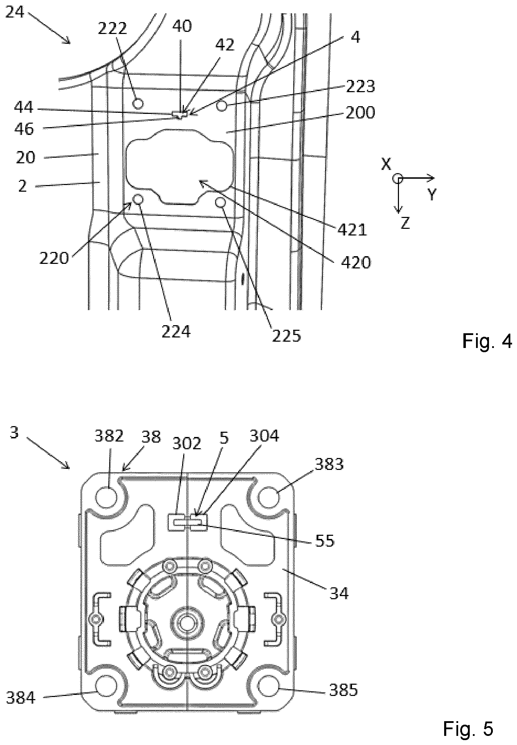

A xyz referential fixed with respect to the vehicle door panel has been represented in figures 1 and 4.

The first axis X of the vehicle door panel 2 can correspond to a transversal axis of the vehicle door panel 2 which can cross both sides 20, 22 (inner side and outer side) of the vehicle door panel 2.

The second axis Z of the vehicle door panel 2 can correspond to a vertical axis of the vehicle door panel 2, which can be parallel to a vertical axis connecting a center of the Earth to the vehicle door panel's center of gravity, for example when the vehicle door panel 2 is attached to the vehicle.

The third axis Y of the vehicle door can correspond to an axis following the door.

The third axis Y is horizontal. The third axis Y is orthogonal to the first axis X and the second axis Y. The third axis is tangent to the vehicle door panel, for example tangent to a mounting surface 200 of the vehicle door panel.

As illustrated in figures 1 and 4, the second axis Z and the third axis Y can define the vehicle door panel plan, and the first axis X can be orthogonal to the vehicle door panel plan.

As the assembly 1 of the present invention is intended for inner vehicle door handle, for example inner vehicle door handle for sliding vehicle door such as vans, the vehicle door panel 2 is configured so that the mounting bracket 3 can be attached to the inner side 20 of the vehicle door panel 2.

To this end, the vehicle door panel 2, for example the inner side 20 of the vehicle door panel 2 can comprise the mounting surface 200, arranged so that the mounting bracket 3 can be assembled and attached to the inner side 20 of the vehicle door panel 2.

As illustrated in figures 1 and 4, the mounting surface 200 of the inner side of the vehicle door can be arranged on the bottom right of the window aperture 24 of the vehicle door panel 2.

The mounting surface 200 can correspond to a part of the vehicle door panel 2, for example a planar part of the vehicle door panel 2, having for example a rectangular shape, however the invention is not limited to that shape and the mounting surface can have any suitable shape such as a square shape, a round shape etc.

The vehicle door panel 2, for example the inner side 20 of the vehicle door panel 2, for example the mounting surface 200 can comprise the first coupling element 4.

The first coupling element 4 can be made in one piece with the vehicle door panel 2.

The first coupling element 4 can comprise a wall 40, corresponding for example to a part of the vehicle door panel 2, delimiting a hole 42 opening on both side (inner and outer side) of the vehicle door panel 2.

The hole 42 can have first part 44 extending along a first axis, which can correspond to the third axis Y of the vehicle door panel, and a second part 46 extending from the first part 44 along a second axis, which can correspond to the second axis Z of the vehicle door panel. The second part 46 can extend on both sides of the first part 44. The hole 42 can have a T-shape.

The first coupling element 4 can extend on an upper part of the mounting surface 200 of the vehicle door panel 2.

A first part 44 of the first coupling element 4, which can form a first leg of the T shaped hole can extend along the third axis Y of the vehicle door panel 2. A second part 46 of the first coupling element 4, which can form a second leg of the T shaped hole can extend from the first part 44 toward a downward direction, for example when the vehicle door panel is attached to the vehicle. The length of the first part 44 can be greater than the length of the second part 46.

The first coupling element is arranged to cooperate with the second coupling element so as to maintain the mounting bracket 3 assembled to the vehicle door panel 2, for example in the final assembly position, before the mounting bracket 3 is attached to the vehicle door panel 4.

In order to attach the mounting bracket 3 to the vehicle door panel 2, the vehicle door panel 2, for example the mounting surface 200 of the vehicle door panel 2 can comprise attachment elements 220. The attachment elements 220 are intended to stationary secured the mounting bracket 3 to the vehicle door panel 2, for example in the final assembly position, so that the mounting bracket cannot move with respect to the vehicle door panel when the mounting bracket is attached to the vehicle door panel. These attachment elements 220 are for example holes, arranged so as to receive screws, for example threaded holes. As an alternative, the attachment elements can be holes, arranged so as to receive screws, with a nut fixed, for example soldered, on the surface of the door. In the illustrated examples, the vehicle door panel 2 can comprise four holes 222, 223, 224, 225 configured to receive screws to attach the mounting bracket 3 to the vehicle door panel 2 by screwing. Each hole 222, 223, 224, 225 can be arranged at an edge or a corner of the mounting surface 200 of the inner side 20 of the vehicle door panel 2 and can open on both sides of the vehicle door panel.

The vehicle door panel 2, for example the mounting surface can further comprise a wall 421, corresponding for a example to another part of the vehicle door panel defining an opening 420 arranged so that a part of the mounting bracket 3 can pass through the vehicle door panel 2 from the inner side 20 of the vehicle door panel to the outer side 22 of the vehicle door panel, when the mounting bracket is assembled or assembled and attached to the vehicle door panel. The opening 420 can extend on a middle part and lower part of the mounting surface of the vehicle door panel.

The mounting bracket 3 is now described.

The mounting bracket can be a mounting bracket 3 for inner vehicle door handle, for example for sliding door, for example for motorized vehicles comprising sliding doors such as vans.

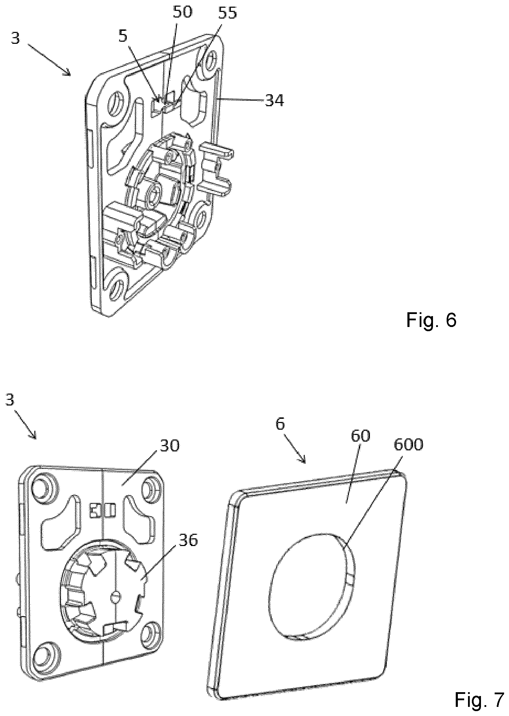

Figures 5 and 6 shows the mounting bracket according to the invention. The mounting bracket 3 is configured so that the mounting bracket 3 can be assembled and attached to the inner side 20 of the vehicle door panel.

The mounting bracket 3 can comprise a base 30 comprising a first side 32 and a second opposite side 34 (figure 5). The base 30 can present a rectangular shape, however the invention is not limited to that shape and the base of the mounting bracket can have any suitable shape such as a square shape, a round shape etc.

The base 30, for example the first side 32 of the base 30 can comprise attachment elements 36 for attaching an inner vehicle door handle (not shown) to the mounting bracket 3. As illustrated in figure 1, the attachment elements 36 can comprise a platform 360 extending from the first side 32 of the base 30, for example on a middle and lower part of the base 30.

The mounting bracket 3 can further comprise the second coupling element 5.

As illustrated on figures 5 and 6, the second coupling element 5 can be arranged on the second side 34 of the base 30, for example on an upper part of the second side 34 of the base 30.

The second coupling element 5 can be made in one piece with the base 30 of the mounting bracket 3.

The second element 5 can have a complementary shape with the first coupling element 4 such as a T-shape.

The second coupling element 5 can comprise a first leg 50, which can extend from the base 30, for example from the second side 34 of the base 30.

The first leg 50 can extend at an angle comprised between 70° and 110° with respect to the second side of the base. For example, the first leg 50 extend at an angle of 90° with respect to the second side of the base. For example, the first leg 50 extends orthogonally from the base 30.

The first coupling element can comprise a second leg 55, extending for example from the first leg 50, for example from an end of the first leg which is opposite to the second end of the leg connecting the base 30. The second leg 55 can extend perpendicularly to the first leg 50, for example parallel to the base 30, for example parallel to the third axis Y of the vehicle door panel, when the mounting bracket 3 is assembled to the vehicle door panel 2.

The first leg 50 and the second leg 55 are arranged so as to form a T-shape. The second coupling element 5 thus has a T-shape.

Openings, for example two openings, for example two square openings 302, 304 can be formed within the base 30 of the mounting bracket and arranged on both sides of the second coupling element 5, for example on both sides of the first leg 50 of the second coupling element 5. This allow to simplify the process of manufacturing of the mounting bracket of the present invention.

The second coupling element 5, for example the first and the second legs of the second coupling element 5, can extend in a plan orthogonal to the plan wherein the base 30 extends.

The second coupling element 5 is arranged to cooperate with the first coupling element 4 so as to maintain the mounting bracket 3 assembled to the vehicle door panel 2, for example in the final assembly position, before the mounting bracket 3 is attached to the vehicle door panel 4.

In order to attach the mounting bracket 3 to the vehicle door panel 2, the mounting bracket3, for example the base 30 of the mounting bracket 3, can further comprise second attachment elements 38 intended to allow for the mounting bracket 3 to be attached to the vehicle door panel 2, for example after the inner vehicle door handle has been attached to the mounting bracket 3. The second attachment elements 38 are for example holes 382, 383, 384, 385 intended to be arranged with regard to the threaded holes 222, 223, 224, 225, or holes with nuts, of the vehicle door panel 2 when the mounting bracket is assembled to the vehicle door panel. The holes 382, 383, 384, 385 are configured to allow screws to pass through said holes 382, 383, 384, 385 toward the threaded holes 222, 223, 224, 225 of the vehicle door panel 2 in order to attach the mounting bracket 3 to the vehicle door panel 4 by screwing. For example, the second attachment elements four holes 382, 383, 384, 385. Each hole can be arranged at an edge or a corner of the base 30 of the mounting bracket 3 and can open on both sides 32, 34 of the base 30.

A method for attaching the mounting bracket to the vehicle door panel of the assembly is described.

The method can comprise a first step of attaching an inner vehicle door handle (not shown) to the mounting bracket 3.

The method can comprise a second step of assembling the mounting bracket 3, for example with the inner vehicle door handle attached thereto, to the vehicle door panel 2.

The method can comprise a first part of the second step wherein the mounting bracket 3 can by mounted on the vehicle door panel 2 in the intermediate assembly position (figure 2) via a translation movement in a forward direction F along the transversal first axis X of the vehicle door panel, for example by pushing on the mounting bracket 3 (figure 1).

During this first part of the second step, the T-shaped legs of the second coupling element 5 of the mounting bracket 3 can be inserted within the T-shaped hole of the first coupling element 4 of the vehicle door panel 2. For example the first and second legs 50, 55 of the second coupling element 5 can pass through the first part 44 of the T-shaped hole of the first coupling element 4 so that the second leg 55 of the second coupling elements 5 can open on the outer side 22 of the vehicle door panel 2 when the mounting bracket 4 is mounted on the inner side 20 of the vehicle door panel 2.

In the intermediate assembly position (figure 2), the mounting bracket 3 can be moved according to two degrees of translation. The mounting bracket 3 can be moved in an opposite direction along the transversal axis X of the vehicle door panel 2, for example in a backward direction B along the transversal axis X, for example by pulling on the mounting bracket. Accordingly, the mounting bracket 3 can be separated or dismount from the vehicle door panel 2. The mounting bracket 3 can also be moved from the intermediate assembly position (figure 2) toward the final assembly position (figure 3) which correspond to the second part of the step of assembling the mounting bracket 3 to the vehicle door panel 2. During this part, the mounting bracket 3 can be moved with respect to the vehicle door panel 2 via a movement, for example a translation movement, in a direction, for example a downward direction, along the vertical second axis Z of the vehicle door panel 2. The mounting bracket 3 can be moved from the intermediate to the final assembly position by an operator or by gravity when the operator releases the mounting bracket 3 in the intermediate assembly position (figure 2).

During this part, the first leg 50 of the second coupling element 5 can slide within the second part 46 of the T-shaped hole of the first coupling element 4 allowing for the mounting bracket 3 to move in the downward direction D along the vertical second axis Z of the vehicle door panel 2.

In the final assembly position (figure 3), the second leg 55 of the first coupling element 5 engages the outer side 22 of the vehicle door panel which can form a part of the wall delimiting the T-shape of the first coupling element 4. The wall of the first coupling element forms a stop preventing the first coupling element to be separated from the vehicle door panel 2, via a movement in the backward direction along the first axis X, and thus preventing the mounting bracket to be separated from the vehicle door panel.

Thus, in the final assembly position, the mounting bracket cannot be separated from the vehicle door panel, without first moving the mounting bracket toward the intermediate assembly position.

In the final assembly position, the mounting bracket can be moved according to one degree of translation i.e. by moving the mounting bracket 3 in an opposite direction, for example an upward direction U along the vertical second axis Z of the vehicle door panel 2, toward the intermediate assembly position (figure 2).

In the final assembly position (figure 3), the coupling elements 4, 5 ensure the positioning of the mounting bracket 3 with respect to the vehicle door panel and guarantee a proper isostatism of the mounting bracket 3.

In the final assembly position (figure 3), the mounting bracket can be attached, for example by screwing. Each of the four holes 382, 383, 384, 385 of the mounting bracket are facing a corresponding threaded hole222, 223, 224, 225 of the vehicle door panel so that screws can pass through said holes 382, 383, 384, 385 of the mounting bracket and screwed in the holes 222, 223, 224, 225 of the vehicle door panel.

The method can comprise a third step of attaching the mounting bracket 3 to the vehicle door panel 2, for example by screwing, for example by means of screws.

When the mounting bracket 3 is attached to the vehicle door panel 2, the mounting bracket 3 can be stationary secured in the final assembly position and cannot move with respect to the vehicle door panel 2.

According to the present invention, the vehicle door panel 2 can be configured so that the mounting bracket 3 remain external to the inner side 20 of the vehicle door panel, when the mounting bracket 3 is assembled or assembled and attached to the vehicle door panel 2. Contrary to the vehicle door panels of the prior art, the mounting panel is not assembled between the inner side and the outer side of the vehicle door panel because of the low thickness of the vehicle door panel, but remains external to the inner side 20 of the vehicle door panel. Furthermore, there is no panel cover to cover the inner side of the vehicle door which are usually used to cover the inner side of the vehicle door panel and the bracket. However, the assembly 1 can comprise a bracket cover 6 (figure 7) arranged to cover the mounting bracket only. The bracket cover 6 can comprise a base 60, for example a rectangular base, defining an opening 600 allowing for the attachment elements 36 for attaching the inner vehicle door handle (not shown) to the mounting bracket 3, to pass through said opening, when the bracket cover 6 covers the mounting bracket 3.

## Claims

1. Assembly (1) for a vehicle comprising:
- a vehicle door panel (2),
- a mounting bracket (3) for mounting a vehicle door handle on the vehicle door panel (2),
the vehicle door panel (2) and the mounting bracket (3) comprising complementary coupling elements (4, 5) to assemble the mounting bracket (3) to the vehicle door panel (2),
the complementary coupling elements (4, 5) being configured so that the mounting bracket (3) can be mounted on the vehicle door panel (2) between
∘ an intermediate assembly position, and
∘ a final assembly position wherein the mounting bracket (3) cannot be separated from the vehicle door panel (2) without first moving the mounting bracket (3) toward the intermediate assembly position.

2. The assembly (1) according to claim 1 wherein the complementary coupling elements (4, 5) are configured so that the mounting bracket (3) can be assembled to the vehicle door panel (2) by:
mounting the mounting bracket (3) on the vehicle door panel (2) in the intermediate assembly position via a movement along a first axis (X), and
moving the mounting bracket (3) with respect to the vehicle door panel (2) via a movement along a second axis (Z) from the intermediate assembly position toward the final assembly position wherein the mounting bracket (3) cannot be separated from the vehicle door panel (2) via a movement along the first axis (X).

3. The assembly (1) according to claim 2 wherein the complementary coupling elements (4, 5) are configured so that the mounting bracket (3) can be assembled to the vehicle door panel (2) by:
mounting the mounting bracket (3) on the vehicle door panel (2) in the intermediate assembly position via a translation movement in a direction, for example a forward direction (F), along the first axis (X), and
moving the mounting bracket (3) with respect to the vehicle door panel (2) via a translation movement in a direction, for example a downward direction (D), along the second axis (Z), from the intermediate assembly position toward the final assembly position wherein the mounting bracket (3) cannot be separated from the vehicle door panel (2) via a translation movement in an opposite direction, for example a backward direction (B), along the first axis (X).

4. The assembly (1) according to any of the preceding claims wherein the vehicle door panel (2) comprises an inner side (20), an outer side (22) and a first coupling element (4) of the complementary coupling elements (4, 5), the first coupling element (4) comprising a wall (40) delimiting a hole (42) opening on both sides (20, 22) of the vehicle door panel (2) and wherein the mounting bracket (3) comprises a second coupling element (5) of the complementary coupling elements (4, 5), the second coupling element (5) comprising at least one leg (50).

5. The assembly (1) according to the preceding claim wherein the first coupling element (4) and the second coupling element (5) have complementary shapes.

6. The assembly (1) according to claims 4 or 5 wherein the hole (42) has a first part (44) extending along a first axis and a second part (46) extending from the first part along a second axis and wherein the second coupling element (5) comprises the first leg (50) and a second leg (55), the first leg (50) extending from a base (30) of the mounting bracket (3) in a first direction and the second leg (55) extending from the first leg in a second direction.

7. The assembly (1) according to the preceding claims, wherein the hole (42) has a T-shape and wherein the second coupling element (5) comprising the first leg (50) and the second leg (55) has a T-shape.

8. Mounting bracket (3) for mounting a door handle to a vehicle door panel (2), the mounting bracket (3) comprising :
a base (30), and
a coupling element (5) comprising a first leg (50) and a second leg (55), the first leg (50) extending from the base (30) in a first direction and the second leg (55) extending from the first leg (50) in a second direction.

9. Vehicle door panel (2) comprising an inner side (20) and an opposite outer side (22), the vehicle door panel (2) comprising a coupling element (4) comprising a wall (40) delimiting a hole opening on both sides (20, 22) of the vehicle door panel (2),the hole (42) having a first part (44) extending along a first axis and a second part (46) extending from the first part (44) along a second axis .

10. Method for attaching a mounting bracket to a vehicle door panel of the assembly according to claim 1, the method comprising the steps of :
- mounting the mounting bracket (3) on an inner side (20) of a vehicle door panel (2) in an intermediate assembly position via a movement along a first axis (X), and
- moving the mounting bracket (3) with respect to the vehicle door panel (2) via a movement along a second axis (Z), from the intermediate assembly position toward the final assembly position.

11. Method according to the preceding claim wherein the vehicle door panel (2) is arranged so that the mounting bracket (3) remains external to the inner side (22) of the vehicle door panel (2).
